(19) Europäisches Patentamt
European Patent Office
Office européen des brevets

(11) **EP 4 668 999 A1**

(12) **EUROPEAN PATENT APPLICATION**
published in accordance with Art. 153(4) EPC

(43) Date of publication:
**24.12.2025 Bulletin 2025/52**

(21) Application number: **23921911.6**

(22) Date of filing: **16.02.2023**

(51) International Patent Classification (IPC):
**H04W 72/542** *(2023.01)*

(52) Cooperative Patent Classification (CPC):
**H04W 72/542**

(86) International application number:
**PCT/CN2023/076616**

(87) International publication number:
**WO 2024/168757 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **ZHU, Jing**
  **Beijing 100022 (CN)**
• **ZHANG, Lei**
  **Beijing 100022 (CN)**

(74) Representative: **Haseltine Lake Kempner LLP**
**Cheapside House**
**138 Cheapside**
**London EC2V 6BJ (GB)**

(54) **METHOD AND APPARATUS FOR CALCULATING AND INDICATING CHANNEL QUALITY INDICATOR**

(57)    Embodiments of the present disclosure provide a method and an apparatus for computing and indicating channel quality indicator (CQI), the method including: a terminal equipment computes a first channel quality indicator (CQI) according to a first parameter, and computes a second channel quality indicator (CQI) according to a second parameter.

201

a terminal equipment computes a first channel quality indicator (CQI) according to a first parameter

202

the terminal equipment computes a second channel quality indicator (CQI) according to a second parameter

**FIG. 2**

EP 4 668 999 A1

**Description**

TECHNICAL FIELD

Embodiments of the present disclosure relate to the technical field of communication.

BACKGROUND

With the popularization of 5G in various industries and its application in more geographical regions, in order to handle more advanced services, very high data rates and denser networks are required, more antennas, greater bandwidths and more frequency bands are used, thereby energy consumption of a 5G device is getting greater and greater.

According to data statistics from operators, average energy consumption of a 5G base station is more than three times that of an LTE base station, and nearly 50% of the cost for deploying a 5G network by operators is electricity fee overhead. More importantly, even during periods when there is no service, the energy consumption cost of the 5G base station is still very high. Thus, network energy saving has important significance for enhancing sustainability of the environment, reducing impacts (for example reducing greenhouse gas emission) on the environment and saving operating costs, 5G network energy saving is an urgent problem to be solved.

In order to achieve network energy saving, R18 initiated topics related to network energy saving to study various energy-saving technologies. In the discussion, network energy-saving technologies may be classified into types such as time-domain/frequency-domain/spatial-domain/energy-domain energy saving. Spatial-domain energy saving for example includes dynamical adjustment of the number of antennas, energy-domain energy saving for example includes dynamical adjustment of data transmission power, and time-domain energy saving for example includes introduction of a cell DTX/DRX technologies, and so on. Using various energy-saving technologies can save a large amount of energy for a network device and/or a terminal equipment.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

SUMMARY

However, the inventor finds that some scenarios of wireless communication applications (such as an energy-saving mode) might have negative impacts. For example, when a network device dynamically adjusts the number of antennas or transmission power, it may cause a change in a corresponding channel, resulting in an inaccurate or untimely measurement result of channel state information (CSI) from a terminal equipment or an inaccurate or untimely result of a channel quality indicator (CQI) thereof, ultimately affecting the transmission performance. How the terminal equipment computes the CQI timely to accurately reflect data transmission channel quality is a key problem that needs to be solved at present.

For at least one of the above problems, the embodiments of the present disclosure provide a method and an apparatus for computing and indicating channel quality indicator (CQI).

According to one aspect of the embodiments of the present disclosure, a method for computing channel quality indicator (CQI) is provided, including:

a terminal equipment computes a first channel quality indicator (CQI) according to a first parameter; and
the terminal equipment computes a second channel quality indicator (CQI) according to a second parameter.

According to another aspect of the embodiments of the present disclosure, an apparatus for computing channel quality indicator (CQI) is provided, including:

a first computing unit configured to compute a first channel quality indicator (CQI) according to a first parameter; and
a second computing unit configured to compute a second channel quality indicator (CQI) according to a second parameter.

According to a further aspect of the embodiments of the present disclosure, a method for indicating channel quality indicator (CQI) is provided, including:

a network device transmits first indication information and/or second indication information to a terminal equipment;

wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter.

According to a further aspect of the embodiments of the present disclosure, an apparatus for indicating channel quality indicator (CQI) is provided, including:

a transmitting unit configured to transmit first indication information and/or second indication information to a terminal equipment;

wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter.

According to a further aspect of the embodiments of the present disclosure, a communication system is provided, including:

a network device configured to transmit first indication information and/or second indication information, wherein the first indication information and/or second indication information is/are at least used to determine or indicate a second parameter; and

a terminal equipment configured to compute a first channel quality indicator (CQI) according to a first parameter, and compute a second channel quality indicator (CQI) according to the second parameter.

One of advantageous effects of the embodiments of the present disclosure lies in: a terminal equipment computes a first channel quality indicator (CQI) according to a first parameter, and computes a second channel quality indicator (CQI) according to a second parameter. Thereby, the terminal equipment is capable of computing a CQI timely, accurately and timely reflecting transmission quality of a data transmission channel, thereby to provide accurate channel information for scheduling of the network device.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

FIG. 1 is a schematic diagram of a communication system in the embodiments of the present disclosure;
FIG. 2 is a schematic diagram of a method for computing channel quality indicator in the embodiments of the present disclosure;
FIG. 3 is another schematic diagram of a method for computing channel quality indicator in the embodiments of the present disclosure;
FIG. 4 is a schematic diagram of a method for indicating channel quality indicator in the embodiments of the present disclosure;
FIG. 5 is a schematic diagram of an apparatus for computing channel quality indicator in the embodiments of the present disclosure;
FIG. 6 is a schematic diagram of an apparatus for indicating channel quality indicator in the embodiments of the present disclosure;
FIG. 7 is a schematic diagram of a network device in the embodiments of the present disclosure;
FIG. 8 is a schematic diagram of a terminal equipment in the embodiments of the present disclosure.

DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited to these.

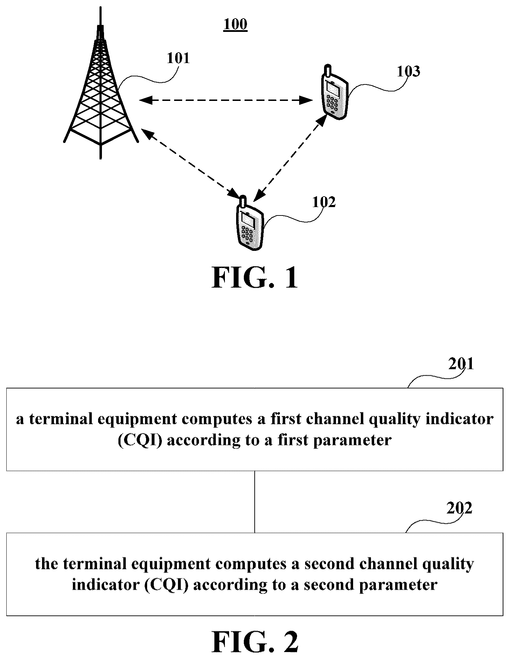

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present disclosure, higher layer signaling may be e.g. radio resource control (RRC) signaling; for example, is called an RRC message, for example includes an MIB, system information, and a dedicated RRC message; or is called an RRC information element (RRC IE). The higher layer signaling, for example, may further be Medium Access Control (MAC) signaling; or called a MAC control element (MAC CE). However, the present disclosure is not limited to this.

In a mobile communication system, CQI is used to reflect downlink channel quality and is one of bases for a network device to perform downlink scheduling. For example, the CQI is obtained by calculation after a terminal equipment measures a channel state information reference signal (CSI-RS). The terminal equipment reports this CQI to the network device. Then, the network device selects an appropriate modulation order, bit rate, downlink data block size, etc. according to this CQI to ensure that the terminal equipment obtains the best downlink performance in different wireless environments.

Regarding specific content of CQI calculation, for example, it may include: that a terminal equipment measures a CSI-RS to obtain a subcarrier-level CSI-RS Signal to Interference plus Noise Ratio (SINR); that the terminal equipment calculates a subcarrier-level PDSCH SINR value from the subcarrier-level CSI-RS SINR according to a ratio of energy per resource element (EPRE) of a physical downlink shared channel (PDSCH) to CSI-RS EPRE; that the terminal equipment uses physical layer mapping (such as an EESM algorithm) to convert the subcarrier-level PDSCH SINR into a PRB group-level PDSCH efficiency SINR; and that the terminal equipment obtains a CQI result according to a mapping table from the PDSCH efficient SINR to the CQI.

The above text only schematically describes CQI calculation, some parameters are used in CQI calculation, such as a ratio of PDSCH EPRE to CSI-RS EPRE, the number of physical resource block (PRB) groups, the number of CSI-RS ports, etc. These parameters are configured by the network device and may affect a calculation result of CQI. Table 1 exemplarily shows some parameters involved in the CQI calculation.

Table 1

| |
|---|
| If configured to report CQI index, in the CSI reference resource, the UE shall assume the following for the purpose of deriving the CQI index, and if also configured, for deriving PMI and RI: |
| - The first 2 OFDM symbols are occupied by control signaling. |
| - The number of PDSCH and DM-RS symbols is equal to 12. |
| - The same bandwidth part subcarrier spacing configured as for the PDSCH reception |
| - The bandwidth as configured for the corresponding CQI report. |
| - The reference resource uses the CP length and subcarrier spacing configured for PDSCH reception |
| - No resource elements used by primary or secondary synchronization signals or PBCH. |
| - Redundancy Version 0. |
| - The ratio of PDSCH EPRE to CSI-RS EPRE is as given in Clause 5.2.2.3.1. |
| - Assume no REs allocated for NZP CSI-RS and ZP CSI-RS. |
| - Assume the same number of front-loaded DM-RS symbols as the maximum front-loaded symbols configured by the higher layer parameter *maxLength* in *DMRS-DownlinkConfig.* |
| - Assume the same number of additional DM-RS symbols as the additional symbols configured by the higher layer parameter *dmrs-AdditionalPosition.* |
| - Assume the PDSCH symbols are not containing DM-RS. |
| - Assume PRB bundling size of 2 PRBs. |
| - The PDSCH transmission scheme where the UE may assume that PDSCH transmission would be performed with up to 8 transmission layers as defined in Clause 7.3.1.4 of [4, TS 38.211]. For CQI calculation, the UE should assume that PDSCH signals on antenna ports in the set [1000,..., 1000+$v$-1] for v layers would result in signals equivalent to corresponding symbols transmitted on antenna ports [3000,..., 3000+$P$-1]*, as given by |

(continued)

$$\begin{matrix} y^{(3000)}(i) \\ \cdots \\ y^{(3000+P-1)}(i) \end{matrix} = W(i) \begin{matrix} x^{(0)}(i) \\ \cdots \\ x^{(v-1)}(i) \end{matrix}$$

where $x(i) = [x^{(0)}(i)...x^{(v-1)}(i)]^T$ is a vector of PDSCH symbols from the layer mapping defined in Clause 7.3.1.4 of [4, TS 38.211], $P \in [1,2,4,8,12,16,24,32]$ is the number of CSI-RS ports. If only one CSI-RS port is configured, $W(i)$ is 1. If the higher layer parameter *reportQuantity* in *CSI-ReportConfig* for which the CQI is reported is set to either 'cri-RI-PMI-CQI' or 'cri-RI-LI-PMI-CQI', $W(i)$ is the precoding matrix corresponding to the reported PMI applicable to *x(i)*. If the higher layer parameter *reportQuantity* in *CSI-ReportConfig* for which the CQI is reported is set to 'cri-RI-CQI', $W(i)$ is the precoding matrix corresponding to the procedure described in Clause 5.2.1.4.2. If the higher layer parameter *reportQuantity* in *CSI-ReportConfig* for which the CQI is reported is set to 'cri-RI-i1-CQI', $W(i)$ is the precoding matrix corresponding to the reported i1 according to the procedure described in Clause 5.2.1.4.2.The corresponding PDSCH signals transmitted on antenna ports [3000,...,3000 + P - 1] would have a ratio of EPRE to CSI-RS EPRE equal to the ratio given in Clause 5.2.2.3.1.

As shown in Table 1, the ratio of PDSCH EPRE to CSI RS EPRE may be determined by a higher-layer parameter poweControlOffset, and the number of CSI-RS ports ( $P \in [1,2,4,8,12,16,24,32]$ is the number of CSI-RS ports) may be determined by a higher-layer parameter nrofPorts.

At present, parameters involved in CQI calculation are semi-statically configured via radio resource control (RRC) signaling and generally does not change over a relatively long period of time. If these parameters need to be changed, these parameters may be adjusted via RRC reconfiguration.

However, in some scenarios (such as an energy-saving mode) of wireless communication applications, transmission power or the number of antennas, etc. may be adjusted, thus these parameters may be changed. By taking network energy saving as an example, a network device may dynamically adjust PDSCH transmission power and the number of CSI-RS ports. This dynamic adjustment may be of a slot level (taking a 15kHz subcarrier spacing as an example, 1 slot is 1ms), or may be of a symbol level (taking the 15kHz subcarrier spacing as an example, 1 symbol is approximately 71.4us).

Therefore, according to existing CQI calculation and reporting mechanisms, when the PDSCH transmission power and the number of CSI-RS ports are dynamically adjusted, the network device indicates adjusted parameters to a terminal equipment via existing RRC reconfiguration, a delay is at least 10ms. The terminal equipment cannot calculate the CQI timely and accurately, and a CQI result cannot be reported to the network device timely either, which does not meet the requirements of network dynamics. That is to say, a CQI result calculated according to the existing mechanism is inaccurate. The existing CQI calculation cannot accurately and timely reflect data transmission channel transmission quality, thereby cannot provide accurate channel information for the scheduling of a network device.

In the embodiments of the present disclosure, CQI calculation is taken as an example for description. CQI indication, CQI calculation and CQI reporting may be a part of CSI measurement, thus without causing confusion, terms such as "CQI indication", "CSI indication", "CSI configuration", etc. may be interchanged, terms such as "CQI calculation", "CSI calculation", "CSI measurement", "CSI generation", "CSI", etc. may be interchanged, and terms such as "CQI reporting", "CSI reporting", "CSI feedback", etc. may be interchanged, the present disclosure is not limited to these. Furthermore, the embodiments of the present disclosure are described by taking energy saving as an example, but are not limited to this, and may be applied to any scenario involving CQI calculation or CSI measurement.

In the embodiments of the present disclosure, the number of CSI-RS ports is taken as an example for description. Terms "the number of CSI-RS ports", "the number of reference signal ports", "CSI-RS port configuration", "CSI-RS port index", "a time-frequency resource corresponding to a CSI-RS port", "CSI-RS resource configuration", etc. may interchanged, the present disclosure is not limited to this.

Embodiments of a first aspect

Embodiments of the present disclosure provide a method for computing channel quality indicator. FIG. 2 is a schematic diagram of a method for computing channel quality indicator in the embodiments of the present disclosure. As shown in FIG. 2, the method includes:

201, a terminal equipment computes a first channel quality indicator (CQI) according to a first parameter; and
202, the terminal equipment computes a second channel quality indicator (CQI) according to a second parameter.

It should be noted that the above FIG. 2 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 2.

In the embodiments of the present disclosure, the first CQI and the second CQI may be understood as two different CQIs, or may be understood as two different values for the same CQI, or may be understood as two different states for the same CQI. This application is not limited to this. For example, the first CQI is a CQI value computed before channel adjustment (such as a channel change due to energy saving), and the second CQI is a CQI value computed after channel adjustment.

In the embodiments of the present disclosure, a terminal equipment computes a first channel quality indicator (CQI) according to a first parameter, and computes a second channel quality indicator (CQI) according to a second parameter. Thereby, the terminal equipment is capable of computing a CQI timely, accurately and timely reflecting transmission quality of a data transmission channel, thereby to provide accurate channel information for scheduling of the network device.

In some embodiments, the first parameter is of the same type as the second parameter. For example, the first parameter and the second parameter are respectively a certain type of parameter before and after dynamic update; the first parameter and the second parameter may be understood as two different values of this type of parameter.

In some embodiments, the first parameter is first reference signal port information for computing the first channel quality indicator, and the second parameter is second reference signal port information for computing the second channel quality indicator.

For example, the terminal equipment computes the first CQI and the second CQI, indicating that different CQI calculations correspond to different numbers of ports. Different ports correspond to different spatial-domain element muting modes or different spatial-domain element configurations, correspondingly, different CQI calculations correspond to different spatial-domain element muting modes or different spatial-domain element configurations. Seen as such, the terminal equipment may conduct multiple measurements on different resources corresponding to different port configurations of the same CSI-RS resource.

For example, the first reference signal port information and/or the second reference signal port information include(s) at least one of the following: the number of ports of a channel state information reference signal (CSI-RS), an offset of the number of ports of the channel state information reference signal (CSI-RS), a port index of the channel state information reference signal (CSI-RS), or time-domain resources and/or frequency-domain resources and/or spatial-domain resources to which ports of the channel state information reference signal (CSI-RS) correspond. For the sake of simplicity in the following text, the number of CSI-RS ports/offsets, etc. is simply referred to as the number of CSI-RS ports.

In some embodiments, the first parameter is first downlink transmission power information for computing the first channel quality indicator, and the second parameter is second downlink transmission power information for computing the second channel quality indicator.

For example, the terminal equipment computes the first CQI and the second CQI, indicating that different CQI calculations correspond to different downlink transmission power information. Different downlink transmission powers correspond to different energy-domain element modes/configurations, correspondingly, different CQI calculations correspond to different energy-domain element modes/configurations. Seen as such, the terminal equipment may conduct multiple measurements on different transmission power configurations of the same CSI-RS resource.

For example, the first downlink transmission power information and/or the second downlink transmission power information include(s) at least one of the following: a ratio of energy per resource element (EPRE) of a physical downlink shared channel (PDSCH) to energy per resource element (EPRE) of a channel state information reference signal (CSI-RS), or an offset of the ratio of EPRE of the physical downlink shared channel (PDSCH) to EPRE of the channel state information reference signal (CSI-RS). For the sake of simplicity in the following text, the ratio/offset of PDSCH EPRE to CSI-RS EPRE is simply referred to as PDSCH EPRE.

The above text schematically describes the first parameter and the second parameter, and the following text then describes how to obtain these parameters. For how to specifically compute the CQI in the embodiments of the present disclosure, the aforementioned contents and related technologies may be referred to, and will not be elaborated here.

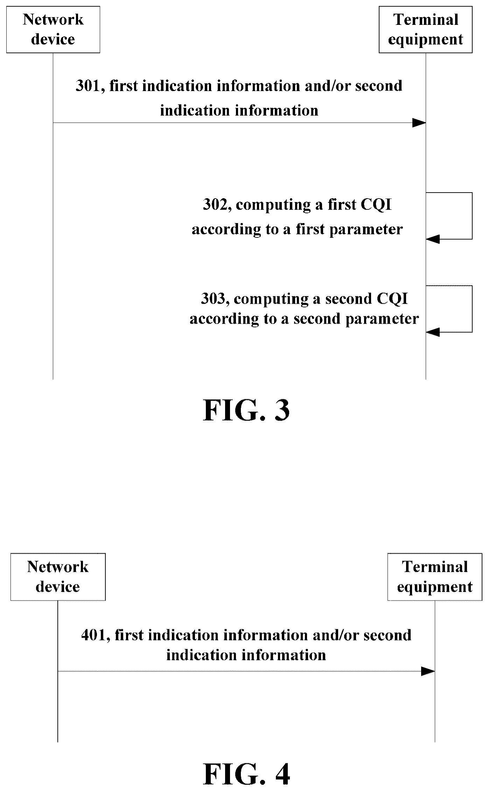

FIG. 3 is another schematic diagram of a method for computing channel quality indicator in the embodiments of the present disclosure, as shown in FIG. 3, the method includes:

301, a terminal equipment receives first indication information and/or second indication information transmitted by a network device, the first indication information and/or the second indication information being at least used to determine or indicate a second parameter.
302, a terminal equipment computes a first channel quality indicator (CQI) according to a first parameter; and
303, the terminal equipment computes a second channel quality indicator (CQI) according to the second parameter.

It should be noted that the above FIG. 3 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 3.

In some embodiments, the first indication information is used to indicate downlink transmission power in a first mode and/or a second mode, or is used to indicate the number of reference signal ports in the first mode and/or the second mode. For example, the first mode is at least one of the following: an energy-saving mode, a power-saving mode, a dormant mode, an abnormal mode, an inactive mode, a mode after a network device adjusts PDSCH EPRE/the number of CSI-RS ports, or a mode of configuration way I for PDSCH EPRE/the number of CSI-RS ports; and the second mode is at least one of the following: a non-energy-saving mode, a non-power-saving mode, a non-dormant mode, a normal mode, an active mode, a mode before a network device adjusts PDSCH EPRE/the number of CSI-RS ports, or a mode of configuration way II for PDSCH EPRE/the number of CSI-RS ports. Embodiments of the present disclosure are not limited to the above contents.

For example, the first indication information may indicate downlink transmission power in the second mode and downlink transmission power in the first mode, the terminal equipment computes first CQI at least according to the downlink transmission power in the second mode, and computes second CQI at least according to the downlink transmission power in the first mode.

For another example, the first indication information may indicate the number of reference signal ports in the second mode and the number of reference signal ports in the first mode, the terminal equipment computes first CQI at least according to the number of reference signal ports in the second mode, and/or, computes second CQI at least according to the number of reference signal ports in the first mode.

In some embodiments, the second indication information is used to indicate at least one of the following: a network state, resource configuration update/adjustment/switching of a CSI-RS, CSI-RS port adjustment, CSI-RS port activation/deactivation indication, CSI-RS port enable indication, CSI measurement adjustment, CSI report configuration adjustment, that a terminal equipment computes a CQI, that the terminal equipment computes the CQI by using parameters in a first mode, or that the terminal equipment computes the CQI by using parameters in a second mode.

For example, the network state indicates at least one of the following: a first mode, a second mode, switching from the first mode to the second mode, switching from the second mode to the first mode, time-domain element adjustment, spatial-domain element adjustment, or energy-domain element adjustment. The spatial-domain element indicates at least one of the following: an antenna port, a logical port, a reference signal port, an antenna factor, an antenna element, or an antenna unit. The energy-domain element indicates at least one of the following: energy per resource element of a physical downlink shared channel (PDSCH), or energy per resource element of a channel state information reference signal. Embodiments of the present disclosure are not limited to the above contents.

For example, the first indication information may indicate downlink transmission power in the second mode and downlink transmission power in the first mode. The terminal equipment computes first CQI according to the downlink transmission power in the second mode, meanwhile computes second CQI according to the downlink transmission power in the first mode. The network device may further transmit second indication information in which "the network state is a second mode"; and in a case where the terminal equipment receives the second indication information, the terminal equipment computes the first CQI at least according to the downlink transmission power in the second mode. And/or, the network device may further transmit second indication information in which "the network state is a first mode"; and in a case where the terminal equipment receives the second indication information, the terminal equipment computes the second CQI at least according to the downlink transmission power in the first mode; or computes the first CQI according to the downlink transmission power in the second mode and computes the second CQI according to the downlink transmission power in the first mode.

For another example, the first indication information may indicate the number of reference signal ports in the second mode and the number of reference signal ports in the first mode. The terminal equipment computes first CQI according to the number of reference signal ports in the second mode, and computes second CQI according to the number of reference signal ports in the first mode. The network device may further transmit second indication information in which "the network state is a second mode"; and in a case where the terminal equipment receives the second indication information, the terminal equipment computes the first CQI at least according to the number of reference signal ports in the second mode. And/or, the network device may further transmit second indication information in which "the network state is a first mode"; and in a case where the terminal equipment receives the second indication information, the terminal equipment computes the second CQI at least according to the number of reference signal ports in the first mode; or computes the first CQI according to the number of reference signal ports in the second mode and computes the second CQI according to the number of reference signal ports in the first mode.

In some embodiments, the first indication information is carried by radio resource control (RRC) signaling and/or a media access control (MAC) control element (CE), and the second indication information is carried by downlink control information (DCI).

In some embodiments, the first indication information and/or the second indication information may be a group common signal, which is used to transmit information to multiple terminal equipments simultaneously. For example, it may be carried by cell-specific or group-specific signaling. Via cell-specific signaling or group-specific signaling, the network device may configure multiple terminal equipments at once, thus signaling overhead may be saved.

In an implementation, in case of receiving the first indication information and the second indication information, the terminal equipment computes the second channel quality indicator by using the second parameter indicated by the first indication information and/or the second indication information and/or an obtained third parameter.

For example, the first indication information may be carried by RRC to configure parameters, and then the second indication information is used to trigger CQI calculation, that is, the CQI calculation is carried out using RRC+DCI. For another example, the first indication information may be carried by a MAC CE to activate parameters, and then the second indication information is used to trigger CQI calculation, that is, the CQI calculation is carried out using MAC CE + DCI. For a further example, the first indication information is carried by RRC to configure parameters and MAC CE is used to activate parameters, and then the second indication information is used to trigger CQI calculation, that is, the CQI calculation is carried out using RRC + MAC CE + DCI.

In another implementation, in case of receiving the first indication information, the terminal equipment computes the second channel quality indicator by using the second parameter indicated by the first indication information and/or an obtained third parameter.

For example, the first indication information may be carried by RRC to configure parameters, and then the CQI calculation is triggered by using a predefined rule (such as a timer) or by a terminal equipment itself. For another example, the first indication information is carried by a MAC CE to activate parameters, and then the CQI calculation is triggered by using a predefined rule (such as a timer) or by a terminal equipment itself.

In some embodiments, the obtained third parameter is at least one of the following: a parameter configured by the network device for the terminal equipment, a parameter computed by the terminal equipment according to a predefined rule, a parameter pre-stored by the terminal equipment, or a default parameter of the terminal equipment; the present disclosure is not limited to this.

By taking "RRC signaling and/or MAC CE semi-statically configures PDSCH EPRE" as an example, the first indication information is used to indicate PDSCH EPRE or a possible adjustment value of the PDSCH EPRE in a first mode; the first mode may be an energy-saving/abnormal mode, or may be a mode after the network device adjusts the PDSCH EPRE, etc.

Table 2 shows an example of RRC signaling configuration. As shown in Table 2, RRC signaling configures PDSCH EPRE or a possible adjustment value of PDSCH EPRE in the first mode, such as powerControlOffset_ES.

## Table 2

```
- ASN1START
-- TAG-NZP-CSI-RS-RESOURCE-START


NZP-CSI-RS-Resource ::=          SEQUENCE {
    nzp-CSI-RS-ResourceId            NZP-CSI-RS-ResourceId,
```

```
    resourceMapping                 CSI-RS-ResourceMapping,
powerControlOffset               INTEGER (-8..15),
powerControlOffset_ES             INTEGER (-8..15),
    powerControlOffsetSS                     ENUMERATED{db-3, db0, db3, db6}
OPTIONAL,  -- Need R
    scramblingID                 ScramblingId,
    periodicityAndOffset                 CSI-ResourcePeriodicityAndOffset
OPTIONAL,  -- Cond PeriodicOrSemiPersistent
    qcl-InfoPeriodicCSI-RS                         TCI-StateId
OPTIONAL,  -- Cond Periodic
    ...
}
```

The number of PDSCH EPREs or possible adjustment values of PDSCH EPREs in the first mode may be one, or may be two or more. The PDSCH EPRE or the possible adjustment value of the PDSCH EPRE in the first mode may be replaced with a PDSCH EPRE offset or an offset of the possible adjustment value of the PDSCH EPRE in the first mode.

Furthermore, an existing IE (such as powerControlOffset) may be reused, or a new IE (such as powerControlOffset_ES) may further be defined. If the PDSCH EPRE or the possible adjustment value of the PDSCH EPRE in the first mode is configured using RRC signaling, the terminal equipment may use these two values to perform two CQI calculations/reportings simultaneously, or the second indication information may further be used to trigger the terminal equipment to use this value to perform CQI calculation/reporting.

The above text exemplarily describes obtaining a PDSCH EPRE value, and in some embodiments, at least two PDSCH EPRE values may further be obtained. For example, RRC signaling configures two values: powerControlOffset_ES1 and powerControlOffset_ES2, respectively corresponding to deep sleep energy saving, light sleep energy saving, etc. For another example, at least two PDSCH EPREs are indicated in DCI.

By taking "RRC signaling and/or MAC CE semi-statically configures the number of CSI-RS ports" as an example, the first indication information is used to indicate the number of CSI-RS ports or a possible adjustment value of the number of CSI-RS ports in a first mode; the first mode may be an energy-saving/abnormal mode, or may be a mode after the network device adjusts configuration of the number of CSI-RS ports, etc.

Table 3 shows an example of RRC signaling configuration. As shown in Table 3, RRC signaling configures the number of CSI-RS ports in the first mode, for example nrofPorts indicates CSI-RS port configuration in an energy-saving/first mode, and information on the number of CSI-RS ports may be obtained via nrofPorts_ES.

Table 3

```
CSI-RS-ResourceMapping ::=           SEQUENCE {

    frequencyDomainAllocation           CHOICE {

        row1                                BIT STRING (SIZE (4)),

        row2                                BIT STRING (SIZE (12)),

        row4                                BIT STRING (SIZE (3)),

        other                               BIT STRING (SIZE (6))

    },

nrofPorts                           ENUMERATED {p1,p2,p4,p8,p12,p16,p24,p32},

portConfig_ES

    firstOFDMSymbolInTimeDomain     INTEGER (0..13)
```

The number of CSI-RS ports or possible adjustment values of the number of CSI-RS ports in a first mode may be one, or may be two or more; the number of CSI-RS ports or the possible adjustment values of the number of CSI-RS ports in the first mode may be replaced with offsets of the number of CSI-RS ports or offsets of the possible adjustment values of the number of CSI-RS ports in the first mode.

Moreover, an existing IE (nrofPorts) may be reused, or a new IE may further be defined. If the number of CSI-RS ports or the possible adjustment values of the number of CSI-RS ports in the first mode is configured using RRC signaling, the terminal equipment may simultaneously perform two CQI calculations/reportings based on two port numbers, or the second indication information may further be used to trigger the terminal equipment to use this value to perform CQI calculation/reporting.

The above text exemplarily describes obtaining one CSI-RS port number, and in some embodiments, at least two CSI-RS port numbers may further be obtained. For example, RRC signaling configures two values: nrofPorts1 and nrofPorts2, respectively corresponding to deep sleep energy saving, light sleep energy saving, etc. For another example, at least two CSI-RS port numbers are indicated in DCI.

In some embodiments, the first indication information is carried by downlink control information (DCI) and/or media access control (MAC) control element (CE). In case of receiving the first indication information, the terminal equipment computes the second channel quality indicator by using the second parameter indicated by the first indication information and/or an obtained third parameter.

By taking "physical layer signaling and/or MAC CE dynamically indicate(s) PDSCH EPRE", for example when the network device adjusts the PDSCH EPRE, a PDSCH EPRE value is indicated to the terminal equipment via the physical layer signaling.

For example, the network device may indicate a specific PDSCH EPRE value via MAC CE.

For another example, the network device indicates a specific PDSCH EPRE value via DCI; for example, there are two fields in the DCI, one field indicates a CSI-RS resource configuration index, and the other field indicates a PDSCH EPRE value.

For another example, the network device and the terminal equipment pre-define a list of possible values of one PDSCH EPRE; the network device indicates an index of the list to the terminal equipment via DCI signaling. This PDSCH EPRE list may be specified via MAC CE or is configured via RRC signaling.

The PDSCH EPREs may all be replaced with PDSCH EPRE offsets, such as offsets relative to PDSCH EPREs in the second mode, such as offsets relative to powerControlOffset. Furthermore, if a PDSCH EPRE value is indicated by physical layer signaling, this signaling may simultaneously trigger the terminal equipment to use this value for CQI calculation/reporting.

By taking "physical layer signaling and/or MAC CE dynamically indicate(s) the number of CSI-RS ports", for example when the network device adjusts the number of CSI-RS ports, the number of CSI-RS ports is indicated to the terminal equipment via the physical layer signaling.

For example, the network device may indicate the specific number of CSI-RS ports via MAC CE.

For another example, the network device may indicate the specific number of CSI-RS ports or a port configuration via DCI; for example, there are two fields in the DCI, one field indicates a CSI-RS resource configuration index, and the other field indicates the number of CSI-RS ports or a port configuration.

For another example, the network device and the terminal equipment pre-define a list of possible values of one CSI-RS port number; the network device indicates an index of the list to the terminal equipment via DCI signaling. This list of the number of CSI-RS ports may be specified via MAC CE or is configured via RRC signaling.

The number of CSI-RS ports may all be replaced with offsets of the number of CSI-RS ports, such as offsets relative to the number of CSI-RS ports in the second mode, such as offsets relative to nrofPorts. Furthermore, if the number of CSI-RS ports is indicated by physical layer signaling, this signaling may simultaneously trigger the terminal equipment to use this value for CQI calculation/reporting.

In some embodiments, the second indication information is carried by downlink control information (DCI) and/or media access control (MAC) control element (CE). In case of receiving the second indication information, the terminal equipment computes the channel quality indicator by using the second parameter determined according to the second indication information and/or an obtained third parameter.

For example, the terminal equipment may predefine a PDSCH EPRE and/or the number of CSI-RS ports in the first mode. In a case of receiving the second indication information, the terminal equipment uses this predefined parameter to calculate the second CQI. As for calculation of the first CQI, parameters configured by RRC may still be adopted.

The PDSCH EPRE and/or the number of CSI-RS ports predefined in the first mode may be a non-zero value or may be a zero value. The zero value indicates that a CSI-RS signal is not transmitted/received. For example, in a case of receiving the second indication information, the terminal equipment knows that the network device does not transmit a CSI-RS signal and may perform skip processing or muting processing, the terminal equipment does not need to receive the CSI-RS signal and does not perform any CQI calculation.

In some embodiments, the terminal equipment determines the second parameter according to the first parameter and/or a predefined rule and/or a preset parameter. The terminal equipment computes the second channel quality indicator by using the second parameter and/or an obtained third parameter.

For example, the terminal equipment may predefine a PDSCH EPRE and/or the number of CSI-RS ports in the first mode. In a case of triggering a predetermined condition (for example a timer expires), the terminal equipment uses this predefined parameter to calculate the second CQI; or, the terminal equipment determines by itself to calculate the second CQI using this predefined parameter. As for calculation of the first CQI, parameters configured by RRC may still be adopted.

The PDSCH EPRE and/or the number of CSI-RS ports predefined in the first mode may be a non-zero value or may be a zero value. The zero value indicates that a CSI-RS signal is not transmitted/received. For example, in a case of triggering a predetermined condition (for example a timer expires), the terminal equipment knows that the network device does not transmit a CSI-RS signal and may perform skip processing or muting processing, the terminal equipment does not receive the CSI-RS signal and does not perform any CQI calculation.

Regarding the second instruction information, the description is made as follows.

In some embodiments, for example, if the second indication information indicates the first mode, the terminal equipment uses powerControlOffset_ES configured by RRC, otherwise uses common powerControlOffset. For another example, if the second indication information indicates to perform CQI calculation, the terminal equipment uses power-ControlOffset_ES configured by RRC, otherwise uses common powerControlOffset.

In some embodiments, for example, if the second indication information indicates that a PDSCH EPRE is not obtained via the traditional higher-layer parameter powerControlOffset, powerControlOffset_ES configured by RRC is used, otherwise common powerControlOffset is used. For another example, if the second indication information indicates that the number of CSI-RS ports is not obtained via the traditional higher-layer parameter nrofPorts, portConfig_ES configured by RRC is used, otherwise common nrofPorts is used.

Regarding the network state, description is made as follows.

In some embodiments, for example, the first mode may be replaced with a network energy-saving/power-saving/sleep/abnormal service /inactive mode/state. The network normal mode may be replaced with a network normal/-conventional /active mode/state. Time-domain element adjustment may be replaced with time-domain reference signal/data transmission adjustment/adaptation/change. Spatial-domain element adjustment may be replaced with adjustment/adaptation/change of an antenna/an antenna port/a TxRU/an antenna panel/an antenna factor. Energy-domain element adjustment may be replaced with proportion/offset adjustment of a PDSCH ERPE relative to a CSI-RS EPRE, or PDSCH transmission power adjustment.

The above text schematically describes CQI calculation, and the following text then schematically describes CQI reporting.

In some embodiments, the terminal equipment computes a second channel quality indicator and feeds back the first channel quality indicator and/or the second channel quality indicator to the network device. The first channel quality indicator and/or the second channel quality indicator is/are aperiodically reported, or periodically reported, or semi-persistently reported.

For example, in a network energy-saving scenario, when the network device dynamically adjusts a PDSCH EPRE and/or the number of CSI-RS ports each time, the terminal equipment may obtain the PDSCH EPRE and/or the number of CSI-RS ports timely by using the aforementioned ways (such as RRC+DCI or DCI), and perform CQI calculation/reporting dynamically and timely, thereby being able to provide accurate channel information for the scheduling of the network device. For example, the terminal equipment may compute only one CQI value each time.

In some embodiments, the terminal equipment computes at least two second channel quality indicators and feeds back the first channel quality indicator and/or the at least two second channel quality indicators to the network device. The first channel quality indicator and/or the at least two second channel quality indicators is/are aperiodically reported, or periodically reported, or semi-persistently reported.

For example, in the network energy-saving scenario, the terminal equipment may obtain all candidate values for dynamic adjustment of the PDSCH EPRE and/or the number of CSI-RS ports in advance, and according to these values, the terminal equipment computes multiple CQI results each time and reports them, one CQI result corresponds to one PDSCH EPRE and/or CSI-RS port number. After receiving multiple CQI results, the network device may select a CQI result that matches a current actual PDSCHEPRE and/or CSI-RS port number from multiple CQI results for scheduling, according to a mapping relationship between preconfigured CQI and PDSCH EPRE and/or the number of CSI-RS ports.

For example, the terminal equipment may periodically obtain PDSCH EPRE and/or the number of CSI-RS ports in the aforementioned way (such as RRC), perform CQI calculation using all possible candidate values of PDSCH EPRE and/or the number of CSI-RS ports, obtain multiple CQI values and report them to the network device, thereby still being able to provide accurate channel information for the scheduling of the network device.

CQI calculation based on a dynamically adjusted PDSCH EPRE is described below by using examples.

In some embodiments, the network device configures at least one PDSCH EPRE via RRC signaling, this value is related to the first mode of the network, or is a possible adjustment value or candidate adjustment value of the PDSCH EPRE, such as powerControlOffset_ES in Table 4 below.

Table 4

| |
|---|
| **5.2.2.5 CSI reference resource definition**<br>If configured to report CQI index, in the CSI reference resource, the UE shall assume the following for the purpose of deriving the CQI index, and if also configured, for deriving PMI and RI:<br>- The ratio of PDSCH EPRE to CSI-RS EPRE is as given in Clause 5.2.2.3.1.<br>- The ratio of PDSCH EPRE to CSI-RS EPRE in energy saving mode is as given in Clause 5.2.2.3.1.<br>**5.2.2.3.1 NZP CSI-RS**<br>The following parameters for which the UE shall assume non-zero transmission power for CSI-RS resource are configured via the higher layer parameter NZP-CSI-RS-Resource, CSI-ResourceConfig and NZP-CSI-RS-ResourceSet for each CSI-RS resource configuration:<br>- *powerControlOffset:* which is the assumed ratio of PDSCH EPRE to NZP CSI-RS EPRE when UE derives CSI feedback and takes values in the range of [-8, 15] dB with 1 dB step size.<br>- *powerControlOffset_ES:* which is the assumed ratio of PDSCH EPRE to NZP CSI-RS EPRE in energy saving mode when UE derives CSI feedback and takes values in the range of [-8, 15] dB with 1 dB step size. |

The terminal equipment computes two CQIs according to the RRC signaling configuration, corresponding to powerControlOffset and powerControlOffset_ES respectively.

Table 4 exemplarily shows an example of RRC signaling, by taking "powerControlOffset_ES is configured" as an example, but the present disclosure is not limited to this. For example, RRC signaling may configure with multiple values, such as powerControlOffset_ES1 and powerControlOffset_ES2; the terminal equipment may compute three CQIs, corresponding to powerControlOffset, powerControlOffset_ES1 and powerControlOffset_ES2 respectively.

In some embodiments, the network device configures at least one PDSCH EPRE via RRC signaling, this value is related to the first mode of the network, or is a possible adjustment value or candidate adjustment value of the PDSCH EPRE, such as powerControlOffset_ES in Table 2.

For example, in the second mode, the terminal equipment determines a PDSCH EPRE for CQI calculation via powerControlOffset configured by RRC signaling. At a certain moment t1, the network device transmits DCI signaling indicating second indication information to the terminal equipment, for example indicating that a network switches from the second mode to the first mode. At this point, the terminal equipment determines the PDSCH EPRE for CQI calculation according to the powerControlOffset_ES configured by the RRC signaling; powerControlOffset_ES is shown in Table 5 below.

Table 5

<table>
<tr><td>

**5.2.2.5 CSI reference resource definition**

If configured to report CQI index, in the CSI reference resource, the UE shall assume the following for the purpose of deriving the CQI index, and if also configured, for deriving PMI and RI:

- The ratio of PDSCH EPRE to CSI-RS EPRE is as given in Clause 5.2.2.3.1.

- The ratio of PDSCH EPRE to CSI-RS EPRE in energy saving mode is as given in Clause 5.2.2.3.1.

**5.2.2.3.1 NZP CSI-RS**

The following parameters for which the UE shall assume non-zero transmission power for CSI-RS resource are configured via the higher layer parameter NZP-CSI-RS-Resource, CSI-ResourceConfig and NZP-CSI-RS-ResourceSet for each CSI-RS resource configuration:

*- powerControlOffset:* which is the assumed ratio of PDSCH EPRE to NZP CSI-RS EPRE when UE derives CSI feedback and takes values in the range of [-8, 15] dB with 1 dB step size.

*- powerControlOffset_ES:* which is the assumed ratio of PDSCH EPRE to NZP CSI-RS EPRE in energy saving mode when UE derives CSI feedback and takes values in the range of [-8, 15] dB with 1 dB step size.
</td></tr>
</table>

At a certain moment t2, the network device transmits DCI signaling indicating second indication information to the terminal equipment, for example indicating that a network switches from the first mode to the second mode, and the terminal equipment determines a PDSCH EPRE for CQI calculation via powerControlOffset configured by RRC signaling.

In some embodiments, PDSCH EPRE is indicated by DCI.

For example, in the second mode, the terminal equipment determines a PDSCH EPRE for CQI calculation via powerControlOffset configured by RRC signaling. powerControlOffset is shown in Table 6 below.

Table 6

```
-- ASN1START

-- TAG-NZP-CSI-RS-RESOURCE-START

NZP-CSI-RS-Resource ::=            SEQUENCE {
    nzp-CSI-RS-ResourceId             NZP-CSI-RS-ResourceId,
    resourceMapping                   CSI-RS-ResourceMapping,
powerControlOffset                INTEGER (-8..15),
```

When PDSCH EPRE is dynamically adjusted (such as network energy-saving), the network device directly indicates a PDSCH EPRE value via DCI, and the terminal equipment performs CQI calculation according to the latest indicated PDSCH EPRE.

DCI indication information may include two fields, the first field indicating a CSI-RS resource configuration number, and the second field indicating a PDSCH EPRE value. When the DCI indicates at least two values, the terminal equipment performs at least two CQI calculations, and each CQI result corresponds to one of PDSCH EPRE information.

In some embodiments, a PDSCH EPRE list may be configured via RRC/MAC CE, and a list index is indicated using the DCI.

For example, in the second mode, the terminal equipment determines a PDSCH EPRE for CQI calculation via powerControlOffset configured by RRC signaling. The network device configures a list of possible values of one PDSCH EPRE via RRC signaling or indicates a list of possible values of one PDSCH EPRE via MAC CE signaling. The network device further indicates a list index via DCI signaling, and the terminal equipment obtains a PDSCH EPRE for CQI calculation.

When the DCI indicates at least two values, the terminal equipment performs at least two CQI calculations. When the DCI signaling indicates a special value, a special list index or an invalid value, or a list index corresponding to powerControlOffset configured by the RRC signaling, it is equivalent to that the network is switched back from the first mode to the second mode.

In some embodiments, the network state can be indicated via DCI or different CSI-RS configurations may be switched, and a PDSCH EPRE is be determined by a predefined rule.

For example, in the second mode, the terminal equipment determines a PDSCH EPRE for CQI calculation via powerControlOffset configured by RRC signaling. At a certain moment t1, the network device transmits DCI signaling indicating second indication information to the terminal equipment, for example indicating that a network switches from the second mode to the first mode.

The terminal equipment obtains a PDSCH EPRE value for CQI calculation by using a pre-defined rule. The number of the PDSCH EPRE values determined by the pre-defined rule may be one or may be at least two; if being at least two, the terminal equipment computes at least two CQI results, each result corresponds to one PDSCH EPRE.

At a certain moment t2, a network device transmits DCI signaling indicating second indication information to a terminal equipment, for example indicating that a network switches from the first mode to the second mode, and the terminal equipment determines a PDSCH EPRE for CQI calculation via powerControlOffset configured by RRC signaling.

Obtaining a PDSCH EPRE is described below by using a pre-defined rule.

In some embodiments, the terminal equipment obtains at least one PDSCH EPRE value for CQI calculation by using a pre-defined rule. The PDSCH EPRE value may include:

a stored PDSCH EPRE value; for example, when the network is switched back from the first mode to the second mode, a last value indicated by the network in the second mode or a value of the parameter powerControlOffset configured by the network;

an offset relative to the PDSCH EPRE in the second mode, for example, a range of powerControlOffset of RRC configuration is {8, -15}, a range of the pre-defined powerControlOffset is also {8, -15}, but a determined power-ControlOffset value is a normal value of the RRC configuration minus a certain constant (e.g. -1); and

a default PDSCH EPRE value in the first mode of the network.

In some embodiments, the terminal equipment obtains at least two PDSCH EPRE values by using a pre-defined rule. The terminal equipment obtains one PDSCH EPRE value according to the above method and derives other PDSCH EPRE values from this value. Derivation rule may be pre-defined. For example, after determining the first PDSCH EPRE by using the above method, a second value is equal to the first value minus a certain constant (e.g. -1), and a third value is equal to the second value minus a certain constant (e.g. -1); and so on.

In some embodiments, multiple PDSCH EPRE values may be pre-defined simultaneously.

CQI calculation based on a dynamically adjusted CSI-RS port number is described below by using examples.

In some embodiments, the network device configures at least one CSI-RS port number via RRC signaling, this value is related to the first mode of the network, or is a possible adjustment value or candidate adjustment value of the CSI-RS port number, such as portConfig_ES in Table 3.

The terminal equipment computes two CQIs according to the RRC signaling configuration, corresponding to nrofPorts and portConfig_ES respectively. RRC signaling may configure multiple related values, such as portConfig_ES1 and portConfig_ES2, the terminal equipment computes three CQIs, corresponding to nrofPorts, portConfig_ES1 and portConfig_ES2 respectively. portConfig_ES may be further shown in Table 7 below.

Table 7

**5.2.2.5 CSI reference resource definition**

If configured to report CQI index, in the CSI reference resource, the UE shall assume the following for the purpose of deriving the CQI index, and if also configured, for deriving PMI and RI:

- The PDSCH transmission scheme where the UE may assume that PDSCH transmission would be performed with up to 8 transmission layers as defined in Clause 7.3.1.4 of [4, TS 38.211]. For CQI calculation, the UE should assume that PDSCH signals on antenna ports in the set [1000,..., 1000+v-1] for v layers would result in signals equivalent to corresponding symbols transmitted on antenna ports [3000,..., 3000+$P$-1], as given by

$$\begin{bmatrix} y^{(3000)}(i) \\ \cdots \\ y^{(3000+P-1)}(i) \end{bmatrix} = W(i) \begin{bmatrix} x^{(0)}(i) \\ \cdots \\ x^{(v-1)}(i) \end{bmatrix}$$

when the serving cell is in energy saving mode, the UE should assume that PDSCH signals on antenna ports in the set [1000,..., 1000+v-1] for v layers would result in signals equivalent to corresponding symbols transmitted on antenna ports [3000,..., 3000+$P'$-1], as given by

$$\begin{bmatrix} y^{(3000)}(i) \\ \cdots \\ y^{(3000+P'-1)}(i) \end{bmatrix} = W(i) \begin{bmatrix} x^{(0)}(i) \\ \cdots \\ x^{(v-1)}(i) \end{bmatrix}$$

(continued)

> where $x(i) = [x^{(0)}(i)...x^{(v-1)}(i)]^T$ is a vector of PDSCH symbols from the layer mapping defined in Clause 7.3.1.4 of [4, TS 38.211], $P \in [1,2,4,8,12,16,24,32]$ is the number of CSI-RS ports. P' < P, and P'is the number of CSI-RS ports in energy saving mode.
>
> **5.2.2.3.1 NZP CSI-RS**
>
> The following parameters for which the UE shall assume non-zero transmission power for CSI-RS resource are configured via the higher layer parameter NZP-CSI-RS-Resource, CSI-ResourceConfig and NZP-CSI-RS-ResourceSet for each CSI-RS resource configuration:
>
> - *nrofPorts* in *resourceMapping* defines the number of CSI-RS ports, where the allowable values are given in Clause 7.4.1.5 of [4, TS 38.211].
>
> - *PortConfig_ES* in *resourceMapping* defines the number of CSI-RS ports in energy saving mode, where the allowable values are given in Clause 7.4.1.5 of [4, TS 38.211].

In some embodiments, the network device configures at least one CSI-RS port number via RRC signaling, this value is related to the first mode of the network, or is a possible adjustment value or candidate adjustment value of the CSI-RS port number, such as portConfig_ES in Table 3.

For example, in the second mode, the terminal equipment determines the number of CSI-RS ports for CQI calculation via nrofPorts configured by RRC signaling. At a certain moment t1, the network device transmits DCI signaling indicating second indication information to the terminal equipment, for example indicating that a network switches from the second mode to the first mode. The terminal equipment determines the number of CSI-RS ports for CQI calculation according to portConfig_ES configured by RRC signaling.

At a certain moment t2, the network device transmits DCI signaling indicating second indication information to the terminal equipment, for example indicating that a network switches from the first mode to the second mode, and the terminal equipment determines the number of CSI-RS ports for CQI calculation via nrofPorts configured by RRC signaling. portConfig_ES may be further shown in Table 7.

In some embodiments, the number of CSI-RS ports is indicated by DCI.

For example, in the second mode, the terminal equipment determines the number of CSI-RS ports for CQI calculation via nrofPorts configured by RRC signaling. When the number of CSI-RS ports is dynamically adjusted (such as network energy-saving), the network device directly indicates information on the number of CSI-RS ports via DCI, and the terminal equipment performs CQI calculation according to the latest indicated information on the number of CSI-RS ports.

DCI indication information may include two fields, the first field indicating a CSI-RS resource configuration number, and the second field indicating information on the number of CSI-RS ports. When the DCI indicates at least two values, the terminal equipment performs at least two CQI calculations, and each CQI result corresponds to one of information on the number of CSI-RS ports.

In some embodiments, a list of the number of CSI-RS ports may be configured via RRC/MAC CE, and a list index is indicated using the DCI.

For example, in the second mode, the terminal equipment determines the number of CSI-RS ports for CQI calculation via nrofPorts configured by RRC signaling. The network device configures a list of possible values of one PDSCH EPRE via RRC signaling or indicates a list of possible values of one CSI-RS port number via MAC CE signaling. The network device further indicates a list index via DCI signaling, and the terminal equipment obtains the number of CSI-RS ports for CQI calculation.

When the DCI indicates at least two values, the terminal equipment performs at least two CQI calculations. When the DCI signaling indicates a special value, a special list index or an invalid value, or a list index corresponding to nrofPorts configured by the RRC signaling, it is equivalent to that the network is switched back from the first mode to the second mode.

In some embodiments, the network state may be indicated via DCI, and the number of CSI-RS ports is determined by a predefined rule.

For example, in the second mode, the terminal equipment determines the number of CSI-RS ports for CQI calculation via nrofPorts configured by RRC signaling. At a certain moment t1, the network device transmits DCI signaling indicating second indication information to the terminal equipment, for example indicating that a network switches from the second mode to the first mode.

The terminal equipment obtains the number of CSI-RS ports for CQI calculation by using a pre-defined rule. The number of CSI-RS ports determined by the pre-defined rule may be one or may be at least two; if being at least two, the terminal equipment computes at least two CQI results, each result corresponds to one CSI-RS port configuration.

At a certain moment t2, the network device transmits DCI signaling indicating second indication information to the terminal equipment, for example indicating that a network switches from the first mode to the second mode, and the terminal equipment determines the number of CSI-RS ports for CQI calculation still via nrofPorts configured by RRC signaling.

Obtaining the number of CSI-RS ports is described below by using a pre-defined rule.

In some embodiments, the terminal equipment obtains at least one CSI-RS port number for CQI calculation by using a pre-defined rule. The CSI-RS port number may include:

a stored number of CSI-RS ports; for example, when the network is switched back from the first mode to the second mode, a last value indicated by the network device in the second mode or a value of the parameter nrofPorts configured by the network device;

an offset relative to the number of CSI-RS ports in the second mode, for example the pre-defined rule is halving, therefore, the determined number of CSI-RS ports is 1/2 of the number of CSI-RS ports in the second mode; and

a default value of the number of CSI-RS ports in the first mode of the network.

In some embodiments, the terminal equipment obtains at least two CSI-RS port numbers by using a pre-defined rule. The terminal equipment obtains one CSI-RS port number according to the above method and derives other CSI-RS port numbers from this value. Derivation rule may be pre-defined; for example, the first CSI-RS port number is determined by using the above method, the second CSI-RS port number is 1/2 of the first CSI-RS port number, and the third CSI-RS port number is 1/2 of the second CSI-RS port number; and so on.

In some embodiments, multiple CSI-RS port numbers may be pre-defined simultaneously.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, a terminal equipment computes a first channel quality indicator (CQI) according to a first parameter, and computes a second channel quality indicator (CQI) according to a second parameter. Thereby, the terminal equipment is capable of computing a CQI timely, accurately and timely reflecting transmission quality of a data transmission channel, thereby to provide accurate channel information for scheduling of the network device.

Embodiments of a second aspect

Embodiments of the present disclosure provide a method for indicating channel quality indicator (CQI), which is described from a network device side, the contents same as the embodiments of the first aspect are not repeated.

FIG. 4 is a schematic diagram of a method for indicating channel quality indicator (CQI) in the embodiments of the present disclosure, as shown in FIG. 4, the method includes:

401, a network device transmits first indication information and/or second indication information to a terminal equipment;

wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter.

It should be noted that the above FIG. 4 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 4.

In some embodiments, the first parameter is of the same type as the second parameter.

In some embodiments, the first parameter is first reference signal port information for computing the first channel quality indicator, and the second parameter is second reference signal port information for computing the second channel quality indicator.

In some embodiments, the first reference signal port information and/or the second reference signal port information include(s) at least one of the following: the number of ports of a channel state information reference signal (CSI-RS), an offset of the number of ports of the channel state information reference signal (CSI-RS), a port index of the channel state information reference signal (CSI-RS), or time-domain and/or frequency-domain and/or spatial-domain resources to which ports of the channel state information reference signal (CSI-RS) correspond.

In some embodiments, the first parameter is first downlink transmission power information for computing the first channel quality indicator, and the second parameter is second downlink transmission power information for computing the second channel quality indicator.

In some embodiments, the first downlink transmission power information and/or the second downlink transmission power information include(s) at least one of the following: a ratio of EPRE of a physical downlink shared channel (PDSCH) to energy per resource element (EPRE) of a channel state information reference signal (CSI-RS), or an offset of the ratio of EPRE of the physical downlink shared channel (PDSCH) to EPRE of the channel state information reference signal (CSI-RS).

In some embodiments, the first indication information is used to indicate downlink transmission power in a first mode and/or a second mode, or is used to indicate the number of reference signal ports in the first mode and/or the second mode.

In some embodiments, the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode.

In some embodiments, the second indication information is used to indicate at least one of the following: a network state, resource configuration update/adjustment/switching of a CSI-RS, CSI-RS port adjustment, CSI-RS port activation/deactivation indication, CSI-RS port enable indication, CSI measurement adjustment, CSI report configuration adjustment, that a terminal equipment computes a CQI, that the terminal equipment computes the CQI by using parameters in a first mode, or that the terminal equipment computes the CQI by using parameters in a second mode.

In some embodiments, the network state indicates at least one of the following: a first mode, a second mode, switching from the first mode to the second mode, switching from the second mode to the first mode, time-domain element adjustment, spatial-domain element adjustment, or energy-domain element adjustment.

In some embodiments, the first indication information is carried by radio resource control (RRC) signaling and/or media access control (MAC) control element (CE), and the second indication information is carried by downlink control information (DCI).

In some embodiments, the first indication information is carried by downlink control information (DCI) and/or media access control (MAC) control element (CE).

In some embodiments, the second indication information is carried by downlink control information (DCI) and/or media access control (MAC) control element (CE).

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, a network device transmits first indication information and/or second indication information to a terminal equipment; wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter. Thereby, the terminal equipment is capable of computing a CQI timely, accurately and timely reflecting transmission quality of a data transmission channel, thereby to provide accurate channel information for scheduling of the network device.

Embodiments of a third aspect

Embodiments of the present disclosure provide an apparatus for computing channel quality indicator. The apparatus for example may be a terminal equipment, or may be one or more parts or components configured in the terminal equipment, contents same as the embodiments of the first aspect are not repeated.

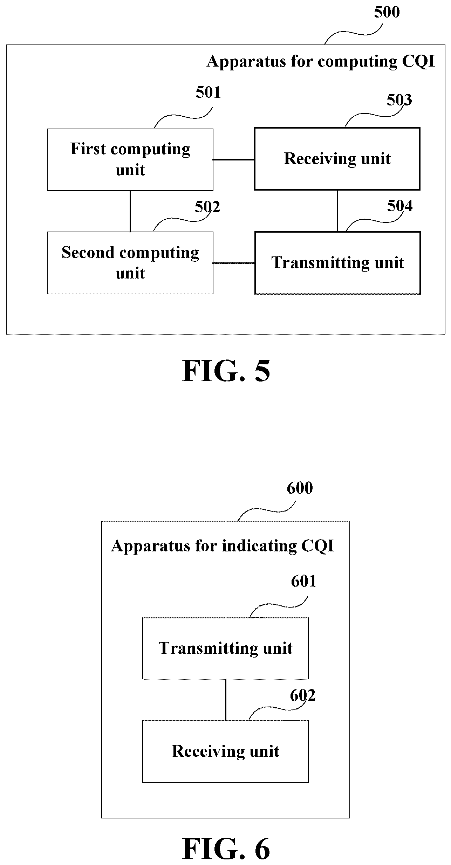

FIG. 5 is a schematic diagram of an apparatus for computing channel quality indicator in the embodiments of the present disclosure. As shown in FIG. 5, an apparatus 500 for computing channel quality indicator includes:

a first computing unit 501 configured to compute a first channel quality indicator (CQI) according to a first parameter; and

a second computing unit 502 configured to compute a second channel quality indicator (CQI) according to a second parameter.

In some embodiments, the first parameter is first reference signal port information for computing the first channel quality indicator, and the second parameter is second reference signal port information for computing the second channel quality indicator.

In some embodiments, the first reference signal port information and/or the second reference signal port information include(s) at least one of the following: the number of ports of a channel state information reference signal (CSI-RS), an offset of the number of ports of the channel state information reference signal (CSI-RS), a port index of the channel state information reference signal (CSI-RS), or time-domain resources and/or frequency-domain resources and/or spatial-domain resources to which ports of the channel state information reference signal (CSI-RS) correspond.

In some embodiments, the first parameter is first downlink transmission power information for computing the first channel quality indicator, and the second parameter is second downlink transmission power information for computing the second channel quality indicator.

In some embodiments, the first downlink transmission power information and/or the second downlink transmission power information include(s) at least one of the following: a ratio of energy per resource element (EPRE) of a physical downlink shared channel (PDSCH) to energy per resource element (EPRE) of a channel state information reference signal (CSI-RS), or an offset of the ratio of EPRE of the physical downlink shared channel (PDSCH) to EPRE of the channel state information reference signal (CSI-RS).

In some embodiments, as shown in FIG. 5, the apparatus 500 for computing channel quality indicator further includes:

a receiving unit 503 configured to receive first indication information and/or second indication information transmitted by a network device, the first indication information and/or second indication information being at least used to determine or indicate the second parameter.

In some embodiments, the first indication information is used to indicate downlink transmission power in a first mode and/or a second mode, or is used to indicate the number of reference signal ports in the first mode and/or the second mode;

the first mode is at least one of the following: an energy-saving mode, a power-saving mode, a dormant mode, an abnormal mode, an inactive mode, a mode after a network device adjusts PDSCH EPRE/the number of CSI-RS ports, or a first way of configuring PDSCH EPRE/the number of CSI-RS ports; and the second mode is at least one of the following: a non-energy-saving mode, a non-power-saving mode, a non-dormant mode, a normal mode, an active mode, a mode before a network device adjusts PDSCH EPRE/the number of CSI-RS ports, or a second way of configuring PDSCH EPRE/the number of CSI-RS ports.

In some embodiments, the second indication information is used to indicate at least one of the following: a network state, resource configuration update/adjustment/switching of a CSI-RS, CSI-RS port adjustment, CSI-RS port activation/deactivation indication, CSI-RS port enable indication, CSI measurement adjustment, CSI report configuration adjustment, that a terminal equipment computes a CQI, that the terminal equipment computes the CQI by using parameters in a first mode, or that the terminal equipment computes the CQI by using parameters in a second mode; the network state indicating at least one of the following: a first mode, a second mode, switching from the first mode to the second mode, switching from the second mode to the first mode, time-domain element adjustment, spatial-domain element adjustment, or energy-domain element adjustment; the spatial-domain element indicates at least one of the following: an antenna port, a logical port, a reference signal port, an antenna factor, an antenna element, or an antenna unit; the energy-domain element indicates at least one of the following: energy per resource element of a physical downlink shared channel (PDSCH), or energy per resource element of a channel state information reference signal.

In some embodiments, the first indication information is carried by radio resource control (RRC) signaling and/or media access control (MAC) control element (CE), and the second indication information is carried by downlink control information (DCI).

In some embodiments, in a case where the receiving unit 503 receives the first indication information and the second indication information, the second computing unit 502 computes the second channel quality indicator by using the second parameter indicated by the first indication information and/or the second indication information and/or an obtained third parameter.

In some embodiments, in a case where the receiving unit 503 receives the first indication information, the second computing unit 502 computes the second channel quality indicator by using the second parameter indicated by the first indication information and/or an obtained third parameter.

In some embodiments, the first indication information is carried by downlink control information (DCI) and/or media access control (MAC) control element (CE).

In some embodiments, in a case where the receiving unit 503 receives the first indication information, the second computing unit 502 computes the second channel quality indicator by using the second parameter indicated by the first indication information and/or an obtained third parameter.

In some embodiments, the second indication information is carried by downlink control information (DCI) and/or media access control (MAC) control element (CE).

In some embodiments, in a case where the receiving unit 503 receives the second indication information, the second computing unit 502 computes the second channel quality indicator by using the second parameter determined according to the second indication information and/or an obtained third parameter.

In some embodiments, the second computing unit 502 determines the second parameter according to the first parameter and/or a predefined rule and/or a preset parameter; and computes the second channel quality indicator by using the second parameter and/or an obtained third parameter.

In some embodiments, as shown in FIG. 5, the apparatus 500 for computing channel quality indicator further includes:

a transmitting unit 504 configured to feed back the first channel quality indicator and/or at least one second channel quality indicator to the network device.

In some embodiments, the first channel quality indicator and/or the at least one second channel quality indicator is/are aperiodically reported, or periodically reported, or semi-persistently reported.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 500 for computing a channel quality indicator may further include other components or modules. For detailed contents of these components or modules, relevant technologies may be referred to.

Moreover, for the sake of simplicity, FIG. 5 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the embodiments of the present disclosure, a terminal equipment computes a first channel quality indicator (CQI) according to a first parameter, and computes a second channel quality indicator (CQI) according to a second parameter. Thereby, the terminal equipment is capable of computing a CQI timely, accurately and timely reflecting transmission quality of a data transmission channel, thereby to provide accurate channel information for scheduling of the network device.

Embodiments of a fourth aspect

Embodiments of the present disclosure provide an apparatus for indicating channel quality indicator. The apparatus may be a network device, or may be one or more parts or components configured in the network device. The contents same as the embodiments of the first to third aspects are not repeated.

FIG. 6 is a schematic diagram of an apparatus for indicating channel quality indicator in the embodiments of the present disclosure. As shown in FIG. 6, an apparatus 600 for indicating channel quality indicator includes:

a transmitting unit 601 configured to transmit first indication information and/or second indication information to a terminal equipment;

wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter.

In some embodiments, as shown in FIG. 6, the apparatus 600 for indicating channel quality indicator further includes:

a receiving unit 602 configured to receive a first channel quality indicator and/or at least one second channel quality indicator.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 600 for indicating channel quality indicator may further include other components or modules. For detailed contents of these components or modules, relevant technologies may be referred to.

Moreover, for the sake of simplicity, FIG. 6 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the embodiments of the present disclosure, a network device transmits first indication information and/or second indication information to a terminal equipment; wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter. Thereby, the terminal equipment is capable of computing a CQI timely, accurately and timely reflecting transmission quality of a data transmission channel, thereby to provide accurate channel information for scheduling of the network device.

Embodiments of a fifth aspect

Embodiments of the present disclosure further provide a communication system, FIG.1 may be referred to, the contents same as the embodiments of the first to fourth aspects are not repeated.

In some embodiments, a communication system 100 at least may include:

a network device 101 configured to transmit first indication information and/or second indication information, wherein the first indication information and/or second indication information is/are at least used to determine or indicate a second parameter; and

a terminal equipment 102 configured to compute a first channel quality indicator (CQI) according to a first parameter, and compute a second channel quality indicator (CQI) according to the second parameter.

Embodiments of the present disclosure further provide a network device, for example may be a base station, but the present disclosure is not limited to this, it may also be other network device.

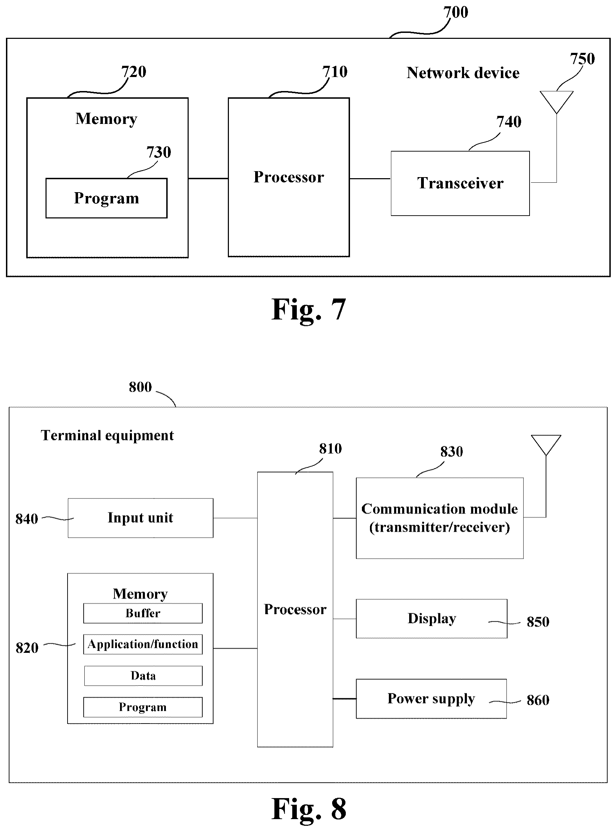

FIG. 7 is a composition schematic diagram of a network device in the embodiments of the present disclosure. As shown in FIG. 7, the network device 700 may include: a processor 710 (such as a central processing unit (CPU)) and a memory 720; the memory 720 is coupled to the processor 710. The memory 720 may store various data; moreover, also stores a program 730 for information processing, and executes the program 730 under the control of the processor 710.

For example, the processor 710 may be configured to execute a program to implement the method for indicating channel quality indicator described in the embodiments of the second aspect. For example, the processor 710 may be configured to perform the following control: transmitting first indication information and/or second indication information to a terminal equipment; wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter.

In addition, as shown in FIG. 7, the network device 700 may further include: a transceiver 740 and an antenna 750, etc.; wherein the functions of said components are similar to relevant arts, which are not repeated here. It's worth noting that the network device 700 does not have to include all the components shown in FIG. 7. Moreover, the network device 700 may further include components not shown in FIG. 7, relevant arts may be referred to.

Embodiments of the present disclosure further provide a terminal equipment, but the present disclosure is not limited to this, it may also be other device.

FIG. 8 is a schematic diagram of a terminal equipment in the embodiments of the present disclosure. As shown in FIG. 8, the terminal equipment 800 may include a processor 810 and a memory 820; the memory 820 stores data and programs, and is coupled to the processor 810. It's worth noting that this figure is exemplary; other types of structures can also be used to supplement or replace this structure, so as to realize a telecommunication function or other functions.

For example, the processor 810 may be configured to execute a program to implement the method for computing channel quality indicator described in the embodiments of the first aspect. For example, the processor 810 may be configured to perform the following control: computing a first channel quality indicator (CQI) according to a first parameter, and computing a second channel quality indicator (CQI) according to a second parameter.

As shown in FIG. 8, the terminal equipment 800 may further include: a communication module 830, an input unit 840, a display 850 and a power source 860. The functions of said components are similar to relevant arts, which are not repeated here. It's worth noting that the terminal equipment 800 does not have to include all the components shown in FIG. 8, said components are not indispensable. Moreover, the terminal equipment 800 may further include components not shown in FIG. 8, relevant arts may be referred to.

Embodiments of the present disclosure further provide a computer program, wherein when a terminal equipment executes the program, the program enables the terminal equipment to execute the method for indicating channel quality indicator described in the embodiments of the first aspect.

Embodiments of the present disclosure further provide a storage medium in which a computer program is stored, wherein the computer program enables a terminal equipment to execute the method for computing channel quality indicator described in the embodiments of the first aspect.

Embodiments of the present disclosure further provide a computer program, wherein when a network device executes the program, the program enables the network device to execute the method for indicating channel quality indicator described in the embodiments of the second aspect.

Embodiments of the present disclosure further provide a storage medium in which a computer program is stored, wherein the computer program enables a network device to execute the method for indicating channel quality indicator described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:

1. A method for computing channel quality indicator (CQI), including:

a terminal equipment computes a first channel quality indicator (CQI) according to a first parameter; and
the terminal equipment computes a second channel quality indicator (CQI) according to a second parameter.

2. The method according to Supplement 1, wherein the first parameter is of the same type as the second parameter.

3. The method according to Supplement 1, wherein the first parameter is first reference signal port information for computing the first channel quality indicator, and the second parameter is second reference signal port information for computing the second channel quality indicator.

4. The method according to Supplement 3, the first reference signal port information and/or the second reference signal port information include(s) at least one of the following: the number of ports of a channel state information reference signal (CSI-RS), an offset of the number of ports of the channel state information reference signal (CSI-RS), a port index of the channel state information reference signal (CSI-RS), or time-domain resources and/or frequency-domain resources and/or spatial-domain resources to which ports of the channel state information reference signal (CSI-RS) correspond.

5. The method according to Supplement 1, wherein the first parameter is first downlink transmission power information for computing the first channel quality indicator, and the second parameter is second downlink transmission power information for computing the second channel quality indicator.

6. The method according to Supplement 5, the first downlink transmission power information and/or the second downlink transmission power information include(s) at least one of the following: a ratio of energy per resource element (EPRE) of a physical downlink shared channel (PDSCH) to energy per resource element (EPRE) of a channel state information reference signal (CSI-RS), or an offset of the ratio of EPRE of the physical downlink shared channel (PDSCH) to EPRE of the channel state information reference signal (CSI-RS).

7. The method according to any one of Supplements 1 to 6, wherein the method further includes:
the terminal equipment receives first indication information and/or second indication information transmitted by a network device, the first indication information and/or second indication information being at least used to determine or indicate the second parameter.

8. The method according to Supplement 7, wherein the first indication information is used to indicate downlink transmission power in a first mode and/or a second mode, or is used to indicate the number of reference signal ports in the first mode and/or the second mode.

9. The method according to Supplement 8, wherein the first mode is at least one of the following: an energy-saving mode, a power-saving mode, a dormant mode, an abnormal mode, an inactive mode, a mode after a network device adjusts PDSCH EPRE/the number of CSI-RS ports, or a first way of configuring PDSCH EPRE/the number of CSI-RS ports; and the second mode is at least one of the following: a non-energy-saving mode, a non-power-saving mode, a non-dormant mode, a normal mode, an active mode, a mode before a network device adjusts PDSCH EPRE/the number of CSI-RS ports, or a second way of configuring PDSCH EPRE/the number of CSI-RS ports.

10. The method according to Supplement 7, wherein the second indication information is used to indicate at least one of the following: a network state, resource configuration update/adjustment/switching of a CSI-RS, CSI-RS port adjustment, CSI-RS port activation/deactivation indication, CSI-RS port enable indication, CSI measurement adjustment, CSI report configuration adjustment, that a terminal equipment computes a CQI, that the terminal equipment computes the CQI by using parameters in a first mode, or that the terminal equipment computes the CQI by using parameters in a second mode.

11. The method according to Supplement 10, wherein the network state indicates at least one of the following: a first mode, a second mode, switching from the first mode to the second mode, switching from the second mode to the first mode, time-domain element adjustment, spatial-domain element adjustment, or energy-domain element adjustment; the spatial-domain element indicates at least one of the following: an antenna port, a logical port, a reference signal port, an antenna factor, an antenna element, or an antenna unit; the energy-domain element indicates at least one of the following: energy per resource element of a physical downlink shared channel (PDSCH), or energy per resource element of a channel state information reference signal.

12. The method according to any one of Supplements 7 to 11, wherein the first indication information is carried by radio resource control (RRC) signaling and/or media access control (MAC) control element (CE), and the second indication information is carried by downlink control information (DCI).

13. The method according to Supplement 12, wherein in case of receiving the first indication information and the second indication information, the terminal equipment computes the second channel quality indicator by using the second parameter indicated by the first indication information and/or the second indication information and/or an obtained third parameter.

14. The method according to Supplement 12, wherein in case of receiving the first indication information, the terminal equipment computes the second channel quality indicator by using the second parameter indicated by the first indication information and/or an obtained third parameter.

15. The method according to any one of Supplements 7 to 11, wherein the first indication information is carried by downlink control information (DCI) and/or media access control (MAC) control element (CE).

16. The method according to Supplement 15, wherein in case of receiving the first indication information, the terminal equipment computes the second channel quality indicator by using the second parameter indicated by the first indication information and/or an obtained third parameter.

17. The method according to any one of Supplements 7 to 11, wherein the second indication information is carried by downlink control information (DCI) and/or media access control (MAC) control element (CE).

18. The method according to Supplement 17, wherein in case of receiving the second indication information, the terminal equipment computes the channel quality indicator by using the second parameter determined according to the second indication information and/or an obtained third parameter.

19. The method according to any one of Supplements 1 to 6, wherein the method further includes:
the terminal equipment determines the second parameter according to the first parameter and/or a predefined rule and/or a preset parameter.

20. The method according to Supplement 19, wherein the terminal equipment computes the second channel quality indicator by using the second parameter and/or an obtained third parameter.

21. The method according to any one of Supplements 13, 14, 16, 18 and 20, wherein the obtained third parameter is at least one of the following: a parameter configured by the network device for the terminal equipment, a parameter computed by the terminal equipment according to a predefined rule, a parameter pre-stored by the terminal equipment, or a default parameter of the terminal equipment.

22. The method according to any one of Supplements 1 to 21, wherein the terminal equipment computes a second channel quality indicator and feeds back the first channel quality indicator and/or the second channel quality indicator to the network device.

23. The method according to Supplement 22, wherein the first channel quality indicator and/or the second channel quality indicator is/are aperiodically reported, or periodically reported, or semi-persistently reported.

24. The method according to any one of Supplements 1 to 21, wherein the terminal equipment computes at least two second channel quality indicators and feeds back the first channel quality indicator and/or the at least two second channel quality indicators to the network device.

25. The method according to Supplement 24, wherein the first channel quality indicator and/or the at least two second channel quality indicators is/are aperiodically reported, or periodically reported, or semi-persistently reported.

26. A method for indicating channel quality indicator (CQI), including:

a network device transmits first indication information and/or second indication information to a terminal equipment;

wherein the first indication information and/or second indication information is/are at least used to determine or indicate a second parameter; and the terminal equipment computes a first channel quality indicator (CQI) according to a first parameter, and computes a second channel quality indicator (CQI) according to the second parameter.

27. The method according to Supplement 26, wherein the first parameter is of the same type as the second parameter.

28. The method according to Supplement 26, wherein the first parameter is first reference signal port information for computing the first channel quality indicator, and the second parameter is second reference signal port information for computing the second channel quality indicator.

29. The method according to Supplement 28, the first reference signal port information and/or the second reference signal port information include(s) at least one of the following: the number of ports of a channel state information reference signal (CSI-RS), an offset of the number of ports of the channel state information reference signal (CSI-RS), a port index of the channel state information reference signal (CSI-RS), or time-domain and/or frequency-domain and/or spatial-domain resources to which ports of the channel state information reference signal (CSI-RS) correspond.

30. The method according to Supplement 26, wherein the first parameter is first downlink transmission power information for computing the first channel quality indicator, and the second parameter is second downlink transmission power information for computing the second channel quality indicator.

31. The method according to Supplement 30, wherein the first downlink transmission power information and/or the second downlink transmission power information include(s) at least one of the following: a ratio of EPRE of a physical downlink shared channel (PDSCH) to energy per resource element (EPRE) of a channel state information reference signal (CSI-RS), or an offset of the ratio of EPRE of the physical downlink shared channel (PDSCH) to EPRE of the channel state information reference signal (CSI-RS).

32. The method according to Supplement 26, wherein the first indication information is used to indicate downlink transmission power in a first mode and/or a second mode, or is used to indicate the number of reference signal ports in the first mode and/or the second mode.

33. The method according to Supplement 32, wherein the first mode is at least one of the following: an energy-saving mode, a power-saving mode, a dormant mode, an abnormal mode, an inactive mode, a mode after a network device adjusts PDSCH EPRE/the number of CSI-RS ports, or a first way of configuring PDSCH EPRE/the number of CSI-RS ports; and the second mode is at least one of the following: a non-energy-saving mode, a non-power-saving mode, a non-dormant mode, a normal mode, an active mode, a mode before a network device adjusts PDSCH EPRE/the number of CSI-RS ports, or a second way of configuring PDSCH EPRE/the number of CSI-RS ports.

34. The method according to Supplement 26, wherein the second indication information is used to indicate at least one of the following: a network state, resource configuration update/adjustment/switching of a CSI-RS, CSI-RS port adjustment, CSI-RS port activation/deactivation indication, CSI-RS port enable indication, CSI measurement adjustment, CSI report configuration adjustment, that a terminal equipment computes a CQI, that the terminal equipment computes the CQI by using parameters in a first mode, or that the terminal equipment computes the CQI by using parameters in a second mode.

35. The method according to Supplement 34, wherein the network state indicates at least one of the following: a first mode, a second mode, switching from the first mode to the second mode, switching from the second mode to the first mode, time-domain element adjustment, spatial-domain element adjustment, or energy-domain element adjustment; the spatial-domain element indicates at least one of the following: an antenna port, a logical port, a reference signal port, an antenna factor, an antenna element, or an antenna unit; the energy-domain element indicates at least one of the following: energy per resource element of a physical downlink shared channel (PDSCH), or energy per resource element of a channel state information reference signal.

36. The method according to any one of Supplements 26 to 35, wherein the first indication information is carried by radio resource control (RRC) signaling and/or media access control (MAC) control element (CE), and the second indication information is carried by downlink control information (DCI).

37. The method according to any one of Supplements 26 to 35, wherein the first indication information is carried by downlink control information (DCI) and/or media access control (MAC) control element (CE).

38. The method according to any one of Supplements 26 to 35, wherein the second indication information is carried by downlink control information (DCI) and/or media access control (MAC) control element (CE).

39. A terminal equipment, including a memory and a processor, the memory storing a computer program, and the processor being configured to execute the computer program to implement the method for computing channel quality indicator (CQI) according to any one of Supplements 1 to 25.

40. A network device, including a memory and a processor, the memory storing a computer program, and the processor being configured to execute the computer program to implement the method for indicating channel quality indicator (CQI) according to any one of Supplements 26 to 38.

## Claims

1. An apparatus for computing channel quality indicator, comprising:
   a first computing unit configured to compute a first channel quality indicator according to a first parameter; and
   a second computing unit configured to compute a second channel quality indicator according to a second parameter.

2. The apparatus according to claim 1, wherein the first parameter is first reference signal port information for computing the first channel quality indicator, and the second parameter is second reference signal port information for computing the second channel quality indicator.

3. The apparatus according to claim 2, wherein the first reference signal port information and/or the second reference signal port information comprise(s) at least one of the following: the number of ports of a channel state information reference signal, an offset of the number of ports of the channel state information reference signal, a port index of the channel state information reference signal, or time-domain resources and/or frequency-domain resources and/or spatial-domain resources to which ports of the channel state information reference signal correspond.

4. The apparatus according to claim 1, wherein the first parameter is first downlink transmission power information for computing the first channel quality indicator, and the second parameter is second downlink transmission power information for computing the second channel quality indicator.

5. The apparatus according to claim 4, wherein the first downlink transmission power information and/or the second downlink transmission power information comprise(s) at least one of the following: a ratio of energy per resource element of a physical downlink shared channel to energy per resource element of a channel state information reference signal, or an offset of the ratio of energy per resource element of the physical downlink shared channel to energy per resource element of the channel state information reference signal.

6. The apparatus according to claim 1, wherein the apparatus further comprises:
   a receiving unit configured to receive first indication information and/or second indication information transmitted by a network device, the first indication information and/or second indication information being at least used to determine or indicate the second parameter.

7. The apparatus according to claim 6, wherein the first indication information is used to indicate downlink transmission power in a first mode and/or a second mode, or is used to indicate the number of reference signal ports in the first mode and/or the second mode;
   the first mode is at least one of the following: an energy-saving mode, a power-saving mode, a dormant mode, an abnormal mode, an inactive mode, a mode after the network device adjusts energy per resource element of a physical downlink shared channel/the number of ports of the channel state information reference signal, or a first configuration mode of energy per resource element of the physical downlink shared channel/the number of ports of the channel state information reference signal; and the second mode is at least one of the following: a non-energy-saving mode, a non-power-saving mode, a non-dormant mode, a normal mode, an active mode, a mode before the network device adjusts energy per resource element of the physical downlink shared channel/the number of ports of the channel state information reference signal, or a second configuration mode of energy per resource element of the physical downlink shared channel/the number of ports of the channel state information reference

8. The apparatus according to claim 6, wherein the second indication information is used to indicate at least one of the following: a network state, resource configuration update/adjustment/switching of the channel state information reference signal, channel state information reference signal port adjustment, channel state information reference signal port activation/deactivation indication, channel state information reference signal port enable indication, channel state information measurement adjustment, channel state information report configuration adjustment, that a terminal equipment computes the channel quality indicator, that the terminal equipment computes the channel quality indicator by using parameters in a first mode, or that the terminal equipment computes the channel quality indicator by using parameters in a second mode;

the network state indicating at least one of the following: a first mode, a second mode, switching from the first mode to the second mode, switching from the second mode to the first mode, time-domain element adjustment, spatial-domain element adjustment, or energy-domain element adjustment;
the spatial-domain element indicating at least one of the following: an antenna port, a logical port, a reference signal port, an antenna factor, an antenna element, and an antenna unit; and the energy-domain element indicating at least one of the following: energy per resource element of a physical downlink shared channel, or energy per resource element of a channel state information reference signal.

9. The apparatus according to claim 6, wherein the first indication information is carried by radio resource control signaling and/or media access control control element, and the second indication information is carried by downlink control information.

10. The apparatus according to claim 9, wherein in case of receiving the first indication information and the second indication information, the terminal equipment computes the second channel quality indicator by using the second parameter indicated by the first indication information and/or the second indication information and/or an obtained third parameter.

11. The apparatus according to claim 9, wherein in case of receiving the first indication information, the terminal equipment computes the second channel quality indicator by using the second parameter indicated by the first indication information and/or an obtained third parameter.

12. The apparatus according to claim 6, wherein the first indication information is carried by downlink control information and/or media access control control element.

13. The apparatus according to claim 12, wherein in case of receiving the first indication information, the terminal equipment computes the second channel quality indicator by using the second parameter indicated by the first indication information and/or an obtained third parameter.

14. The apparatus according to claim 6, wherein the second indication information is carried by downlink control information and/or media access control control element.

15. The apparatus according to claim 14, wherein in case of receiving the second indication information, the terminal equipment computes the channel quality indicator by using the second parameter determined according to the second indication information and/or an obtained third parameter.

16. The apparatus according to claim 1, wherein the terminal equipment determines the second parameter according to the first parameter and/or a predefined rule and/or a preset parameter; and the terminal equipment computes the second channel quality indicator by using the second parameter and/or an obtained third parameter.

17. The apparatus according to claim 1, wherein the apparatus further comprises:
a transmitting unit configured to feed back the first channel quality indicator and/or at least one second channel quality indicator to the network device.

18. The apparatus according to claim 17, wherein the first channel quality indicator and/or the at least one second channel quality indicator is/are aperiodically reported, or periodically reported, or semi-persistently reported.

19. An apparatus for indicating channel quality indicator, comprising:

a transmitting unit configured to transmit first indication information and/or second indication information to a terminal equipment;
wherein the first indication information and/or second indication information is/are at least used to determine or indicate a second parameter; and the terminal equipment computes a first channel quality indicator according to a first parameter, and computes a second channel quality indicator according to the second parameter.

**20.** A communication system, comprising:

a network device configured to transmit first indication information and/or second indication information, wherein the first indication information and/or second indication information is/are at least used to determine or indicate a second parameter; and
a terminal equipment configured to compute a first channel quality indicator according to a first parameter, and compute a second channel quality indicator according to the second parameter.

100

101

103

102

# FIG. 1

201

a terminal equipment computes a first channel quality indicator (CQI) according to a first parameter

202

the terminal equipment computes a second channel quality indicator (CQI) according to a second parameter

# FIG. 2

FIG. 3

FIG. 4

500

**Apparatus for computing CQI**

501                                    503

| First computing unit | Receiving unit |
|---|---|

502                                    504

| Second computing unit | Transmitting unit |
|---|---|

**FIG. 5**

600

**Apparatus for indicating CQI**

601

| Transmitting unit |
|---|

602

| Receiving unit |
|---|

**FIG. 6**

700

Network device

720          710                                    750

Memory          Processor

730                                         740

Program                        Transceiver

**Fig. 7**

800

Terminal equipment

810                    830

840 — Input unit                    Communication module
                                    (transmitter/receiver)

Memory

Buffer                    Processor          Display          850

820 —    Application/function

Data

Program                                      Power supply      860

**Fig. 8**

## INTERNATIONAL SEARCH REPORT

| International application No. |
| --- |
| **PCT/CN2023/076616** |

| A. | CLASSIFICATION OF SUBJECT MATTER |
| --- | --- |

H04W 72/542(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, WOTXT, USTXT, EPTXT, VEN, CNKI, 3GPP: 信道状态信息, 参考信号, 端口, 端口数, 功率, 调整, 控制, 偏移, 计算, 节能, 偏移, 省电, 睡眠, 索引, 下行, 资源, CSI-RS, CSI, CQI, power, control, offset, PDSCH EPRE, adjust, port, resource

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115604734 A (HUAWEI TECHNOLOGIES CO., LTD.) 13 January 2023 (2023-01-13) description, paragraphs [0106]-[0207] | 1-20 |
| X | WO 2021198928 A1 (TELEFONAKTIEBOLAGET LM ERICSSON (PUBL)) 07 October 2021 (2021-10-07) description, page 13 line 23-page 41 line 27 | 1-20 |
| A | CN 113949471 A (HUAWEI TECHNOLOGIES CO., LTD.) 18 January 2022 (2022-01-18) entire document | 1-20 |
| A | CN 114503729 A (QUALCOMM INC.) 13 May 2022 (2022-05-13) entire document | 1-20 |

☐ Further documents are listed in the continuation of Box C.    ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 November 2023** | **03 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076616**

| Patent document cited in search report | | | Publication date (day/month/year) | Patent family member(s) | | | Publication date (day/month/year) |
|---|---|---|---|---|---|---|---|
| CN | 115604734 | A | 13 January 2023 | WO | 2023280051 | A1 | 12 January 2023 |
| WO | 2021198928 | A1 | 07 October 2021 | EP | 4128560 | A1 | 08 February 2023 |
| | | | | US | 2023122910 | A1 | 20 April 2023 |
| CN | 113949471 | A | 18 January 2022 | WO | 2022012609 | A1 | 20 January 2022 |
| CN | 114503729 | A | 13 May 2022 | EP | 4042785 | A1 | 17 August 2022 |
| | | | | EP | 4042785 | A4 | 18 October 2023 |
| | | | | WO | 2021068149 | A1 | 15 April 2021 |
| | | | | WO | 2021068915 | A1 | 15 April 2021 |
| | | | | US | 2023163911 | A1 | 25 May 2023 |

Form PCT/ISA/210 (patent family annex) (July 2022)